# EUROPEAN PATENT APPLICATION

(11) **EP 4 572 078 A1**
(43) Date of publication of application: **18.06.2025**
(21) Application number: 23907676.3
(22) Date of filing: 19.12.2023
(51) Int. Cl.: H02J 7/00, H01M 50/213, H01M 50/249, H01B 3/18, H01R 4/70

(54) **BATTERY CELL CHARGING AND DISCHARGING DEVICE AND BATTERY CELL PRODUCED USING SAME, AND BATTERY PACK AND VEHICLE COMPRISING BATTERY CELLS**

(30) Priority: 20.12.2022 KR 20220179667; 13.12.2023 KR 20230180321
(71) Applicant: LG Energy Solution, Ltd., Seoul 07335 (KR)
(72) Inventor: KIM, Min-Kyu, Daejeon 34122 (KR)
(74) Representative: Goddar, Heinz J.
(86) International application number: PCT/KR2023/020949
(87) International publication number: WO 2024/136391

(57) **Abstract**

Disclosed are a battery cell charge/discharge device, a battery cell produced using the same, and a battery pack and a vehicle including the battery cell. A battery cell charge/discharge device according to an embodiment of the present disclosure, which is a device for charging and discharging a battery cell during an activation process of the battery cell, includes a charge/discharge member contacting the battery cell to charge and discharge the battery cell; a power supply member connected to the charge/discharge member and supplying power to the charge/discharge member; and an insulating member surrounding the charge/discharge member and varying in length during charge/discharge of the battery cell.

## Description

### TECHNICAL FIELD

The present application claims priority to Korean Patent Application No. 10-2022-0179667 filed on December 20, 2022 and Korean Patent Application No. 10-2023-0180321 filed on December 13, 2023 in the Republic of Korea, the disclosures of which are incorporated herein by reference.

The present disclosure relates to a battery cell charge/discharge device, a battery cell produced using the same, and a battery pack and a vehicle including the battery cell, and more specifically, to a battery cell charge/discharge device capable of preventing a short circuit during charge/discharge of the battery cell and a battery cell produced using the same, and a battery pack and a vehicle including the battery cell.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources.

Such secondary batteries are attracting attention as a new energy source to improve eco-friendliness and energy efficiency in that it has not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of this unit secondary battery cell is about 2.5 V to 4.5 V.

Therefore, when a higher output voltage is required, a plurality of battery cells may be connected in series to configure a battery module or a battery pack. **In** addition, depending on the demanded charge/discharge capacity, a plurality of battery cells may also be connected in parallel to configure a battery module or a battery pack. Thus, the number and electrical connection type of battery cells included in the battery module or the battery pack may be variously set depending on at least one of the required output voltage and the demanded charge/discharge capacity.

Meanwhile, cylindrical, prismatic, and pouch-type battery cells are known as types of secondary battery cells. In the case of a cylindrical battery cell, a separator, which is an insulator, is interposed between the positive electrode plate and the negative electrode plate and wound to form a jelly roll-shaped electrode assembly, which is then inserted into a battery can together with an electrolyte to form a battery. And, in the cylindrical battery cell, a current collector plate may be used to electrically connect the positive electrode plate and the negative electrode plate, respectively.

The cylindrical battery cell may be configured to sort out defective battery cells through an activation process of charge/discharge. Here, during the activation process by the charge/discharge device, the positive electrode charge/discharge pin and the negative electrode charge/discharge pin are in contact with the positive electrode terminal and the negative electrode terminal of the cylindrical battery cell, respectively, to charge and discharge the cylindrical battery cell.

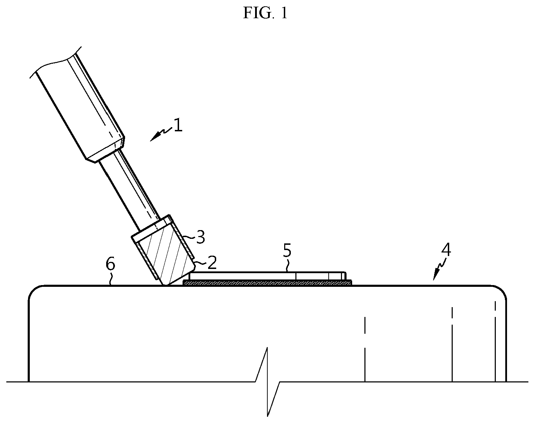

FIG. 1 is a view showing a state in which a short circuit occurs when charging and discharging a cylindrical battery cell using a conventional charge/discharge pin.

In the case of the conventional charge/discharge pin 1, an insulating top cap portion 3 is installed on the pin head portion 2 to prevent a short circuit during the charge/ discharge process, but the length of the pin head portion 2 is formed to be longer than the length of the insulating top cap portion 3.

In such prior art, as shown in FIG. 1, if the charge/discharge pin 1 is tilted due to various causes during the charge/discharge process and the pin head portion 2 of the charge/discharge pin 1 contacts the battery cell 4, the pin head portion 2 may contact the positive electrode terminal 5 and the negative electrode terminal 6 at the same time, thereby causing a short circuit in the battery cell 4 to damage the battery cell 4.

### DISCLOSURE

### Technical Problem

The present disclosure is designed to solve the problems of the related art, and therefore the present disclosure is directed to providing a battery cell charge/discharge device capable of preventing a short circuit that may occur during the charge/discharge process of a cylindrical battery cell, a battery cell produced using the same, and a battery pack and a vehicle including the battery cell.

The present disclosure is also directed to providing a battery cell charge/discharge device capable of improving productivity by reducing the occurrence of defective battery cells due to a short circuit, a battery cell produced using the same, and a battery pack and a vehicle including the battery cell.

However, technical problems to be solved by the present disclosure are not limited to the above-described problems, and other problems not mentioned herein may be clearly understood by those skilled in the art from the following description of the present disclosure.

### Technical Solution

According to one aspect of the present disclosure, there may be provided a battery cell charge/discharge device, which is a device for charging and discharging a battery cell during an activation process of the battery cell, including a charge/discharge member contacting the battery cell to charge and discharge the battery cell; a power supply member connected to the charge/discharge member and supplying power to the charge/discharge member; and an insulating member surrounding the charge/discharge member and varying in length during charge/discharge of the battery cell.

In an embodiment, the charge/discharge member may include a cable portion connected to the power supply member; and a charge/discharge head portion coupled to the cable portion and charging and discharging the battery cell, and the insulating member may fully surround the side of the charge/discharge head portion, and during charge/ discharge of the battery cell, the insulating member may contact the battery cell earlier than the charge/discharge head portion and vary in length, so that the charge/discharge head portion may contact the battery cell.

In an embodiment, the insulating member may be formed to be longer than the charge/discharge head portion.

In an embodiment, the charge/discharge head portion may be accommodated inside the insulating member, and the insulating member may protrude further downward than the charge/discharge head portion based on the vertical direction.

In an embodiment, the insulating member may be made of an elastic material.

In an embodiment, the insulating member may be elastically contracted upward when in contact with the battery cell.

In an embodiment, the insulating member may be configured to include at least one of polyamide, polyurethane, and polyester.

In an embodiment, the insulating member may include a first cover portion coupled to the cable portion and surrounding the charge/discharge head portion; and a second cover portion inserted into the first cover portion, moving along the inside of the first cover portion, and surrounding the charge/discharge head portion.

In an embodiment, a guide groove may be formed in the first cover portion, a guide protrusion may be formed on the second cover portion, and the guide protrusion of the second cover portion may move along the guide groove of the first cover portion.

In an embodiment, the battery cell charge/discharge device may include an elastic portion located inside the first cover portion and coupled to the second cover portion to provide an elastic force to the second cover portion.

In an embodiment, the battery cell charge/discharge device may further include a jig member on which the battery cell is seated, and which may move up and down while the battery cell is seated.

In an embodiment, the jig member may include a cell tray on which the battery cell is seated.

Meanwhile, according to another aspect of the present disclosure, there may be provided a battery cell produced using the battery cell charge/discharge device described above, there may also be provided a battery pack including at least one battery cell described above, and there may also be provided a vehicle including at least one battery cell described above.

### Advantageous Effects

Each embodiment of the present disclosure has the effect of preventing a short circuit that may occur during the charge/discharge process of a cylindrical battery cell.

In addition, it has the effect of improving productivity by reducing the occurrence of defective battery cells due to a short circuit.

However, the effects to be obtained by the present disclosure are not limited to the above-described effects, and other effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a view showing a state in which a short circuit occurs when charging and discharging a cylindrical battery cell using a conventional charge/discharge pin.
FIG. 2 is a view showing a state in which a short circuit is prevented even when a battery cell charge/discharge device according to a first embodiment of the present disclosure is tilted and contacts a cylindrical battery cell.
FIG. 3 is a view showing a state in which a charge/discharge member is surrounded by an insulating member in a battery cell charge/discharge device according to a first embodiment of the present disclosure.
FIG. 4 is a view showing a state in which a battery cell is charged and discharged by a battery cell charge/discharge device according to a first embodiment of the present disclosure.
FIGS. 5 and 6 are views showing a process in which a battery cell is charged and discharged by a battery cell charge/discharge device according to a second embodiment of the present disclosure.
FIGS. 7 and 8 are views showing a process in which a battery cell is charged and discharged by a battery cell charge/discharge device according to a third embodiment of the present disclosure.
FIGS. 9 and 10 are schematic perspective views showing a state in which a guide protrusion of a second cover portion moves along a guide groove of a first cover portion in a battery cell charge/discharge device according to a third embodiment of the present disclosure.
FIGS. 11 and 12 are views showing a process in which a battery cell is charged and discharged by a battery cell charge/discharge device according to a fourth embodiment of the present disclosure.
FIG. 13 is a schematic view of a battery cell charge/discharge device according to a fifth embodiment of the present disclosure.
FIG. 14 is a view schematically showing the configuration of a battery pack including a battery cell produced using a battery cell charge/discharge device according to each embodiment of the present disclosure.
FIG. 15 is a view for describing a vehicle including the battery pack of FIG. 14.

### BEST MODE

Hereinafter, preferred embodiments of the present disclosure will be described in detail with reference to the accompanying drawings. The terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments described in this specification and the configurations shown in the drawings are only one of the most preferred embodiments of the present disclosure, not intended to entirely represent the technical aspects of the present disclosure, so it should be understood that various equivalents and modifications may be made thereto at the time of filing the present application.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

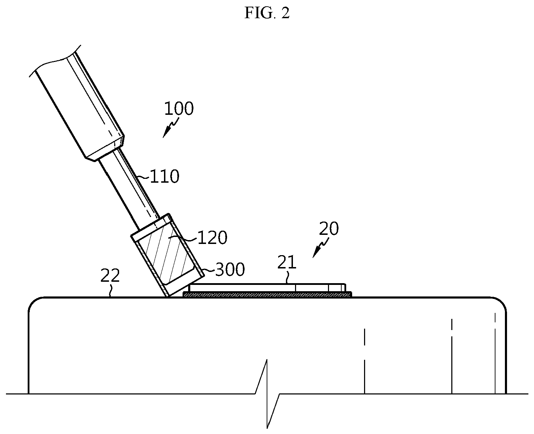

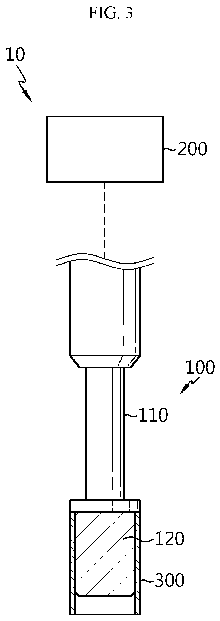

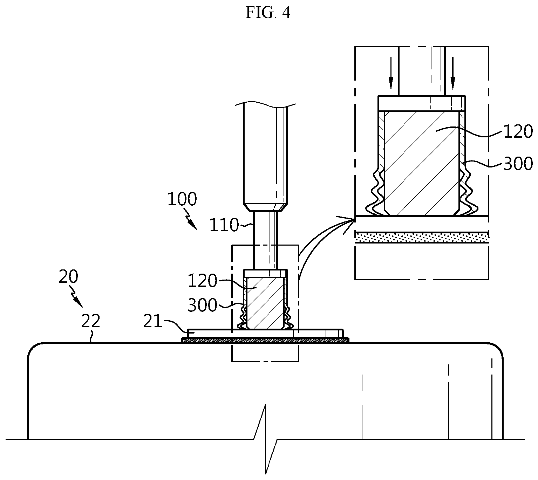

FIG. 2 is a view showing a state in which a short circuit is prevented even when a battery cell charge/discharge device according to a first embodiment of the present disclosure is tilted and contacts a cylindrical battery cell, FIG. 3 is a view showing a state in which a charge/discharge member is surrounded by an insulating member in a battery cell charge/discharge device according to a first embodiment of the present disclosure, and FIG. 4 is a view showing a state in which a battery cell is charged and discharged by a battery cell charge/discharge device according to a first embodiment of the present disclosure.

The battery cell charge/discharge device 10 according to the first embodiment of the present disclosure is a device for charging and discharging a battery cell 20 during an activation process of the battery cell 20, for example, a cylindrical battery cell. Hereinafter, the description will focus on the case where the battery cell 20 is a cylindrical battery cell.

A cylindrical battery cell may include an electrode assembly, a battery can, and a cap plate.

The electrode assembly has a structure in which a positive electrode plate, a negative electrode plate, and a separator interposed between the positive electrode plate and the negative electrode plate are wound in one direction. And, a center hole is formed in the center of the electrode assembly and the electrode assembly may be formed in a jelly roll type.

For example, the electrode assembly may be manufactured by winding a laminate formed by sequentially stacking a negative electrode plate, a separator, a positive electrode plate, and a separator at least once. Here, the positive electrode plate and the negative electrode plate may be formed in a sheet shape.

That is, the electrode assembly applied to this embodiment may be a winding type electrode assembly. In this case, an additional separator may also be provided on the outer circumferential surface of the electrode assembly for insulation from the battery can. That is, the electrode assembly may have a winding structure well known in the related art without limitation.

A positive electrode active material may be applied to one or both sides of the positive electrode plate, and a first uncoated portion to which no positive electrode active material is applied may be formed at an end of the positive electrode plate. The first uncoated portion is exposed to the outside of the separator while forming a plurality of winding turns around the center of the electrode assembly, and may itself be used as an electrode tab. However, the first uncoated portion may not be formed on the positive electrode plate.

A negative electrode active material may be applied to one or both sides of the negative electrode plate, and a second uncoated portion to which no negative electrode active material is applied may be formed at an end of the negative electrode plate. The second uncoated portion is exposed to the outside of the separator while forming a plurality of winding turns around the center of the electrode assembly, and may itself be used as an electrode tab. However, the second uncoated portion may not be formed on the negative electrode plate.

Here, when the positive electrode plate and the negative electrode plate each include an uncoated portion, the first uncoated portion and the second uncoated portion may be configured to face opposite directions.

And, the positive electrode active material coated on the positive electrode plate and the negative electrode active material coated on the negative electrode plate may be used without limitation so long as they are active materials known in the art.

The separator may be a porous polymer film, for example, a porous polymer film made of a polyolefin-based polymer such as ethylene homopolymer, propylene homopolymer, ethylene/butene copolymer, ethylene/hexene copolymer, and ethylene/ methacrylate copolymer, either alone or in a stacked structure thereof.

As another example, the separator may be a conventional porous nonwoven fabric, for example, a nonwoven fabric made of high melting point glass fiber, polyethylene terephthalate fiber, and the like.

At least one surface of the separator may include a coating layer of inorganic particles. In addition, the separator itself may be formed of a coating layer of inorganic particles. The particles constituting the coating layer may have a structure coupled to a binder so that an interstitial volume exists between adjacent particles.

And, the center hole of the electrode assembly is also used for welding the cell terminal (positive electrode terminal) and the positive electrode current collector plate. That is, it may be configured to weld the cell terminal and the positive electrode current collector plate by irradiating a laser through the center hole of the electrode assembly.

An electrode assembly is accommodated in the battery can. And, a through hole may be formed in the battery can. Here, the battery can is formed in a cylindrical shape such that the electrode assembly is accommodated inside the battery can and may be electrically connected to the negative electrode plate of the electrode assembly. Accordingly, the battery can may have the same polarity as the negative electrode plate, that is, the negative electrode.

The diameter of the battery can is formed to be larger than the diameter of the electrode assembly. A gap of a preset size is formed between the battery can and the positive electrode current collector plate, and an insulator may be interposed between the gap.

If the size of the battery can is set according to the standard and then the size of the electrode assembly is increased, the overall capacity of the cylindrical battery cell increases, but the gap between the battery can and the electrode assembly decreases.

That is, since increasing the size of the electrode assembly to increase the overall capacity of the cylindrical battery cell reduces the gap between the battery can and the electrode assembly, the insulator should be able to be interposed between the reduced gap of the battery can and the electrode assembly to increase the capacity of the cylindrical battery cell, and to this end, the thickness of the insulator is preferably as thin as possible.

A battery can is an approximately cylindrical receptor, which may be made of a conductive material such as metal, for example. The material of the battery can may be made of a conductive metal, such as aluminum, steel, stainless steel, or the like, but is not limited thereto.

The positive electrode current collector plate is electrically connected to the positive electrode plate, for example, at the top of the electrode assembly. For example, the positive electrode current collector plate is made of a conductive metal material and may be electrically connected to the first uncoated portion of the positive electrode plate.

The cell terminal is made of a conductive metal material and is electrically connected to the positive electrode current collector plate. And, the cell terminal is electrically connected to the positive electrode plate of the electrode assembly through the positive electrode current collector plate, and thereby has a positive polarity.

That is, the cell terminal may function as a positive electrode terminal 21 (see FIG. 2). And, the battery can is electrically connected to the negative electrode plate of the electrode assembly as described above, and thereby may have a negative polarity, that is, function as a negative electrode terminal 22 (see FIG. 2).

The negative electrode current collector plate is electrically connected to the negative electrode plate, for example, at the bottom of the electrode assembly. For example, the negative electrode current collector plate is made of a conductive metal material such as aluminum, steel, copper, nickel, or the like and may be electrically connected to the second uncoated portion of the negative electrode plate.

The negative electrode current collector plate may be electrically connected to the battery can. To this end, the negative electrode current collector plate may be secured with at least a portion of its edge part interposed between the inner surface of the battery can and the sealing gasket.

In an embodiment, at least a portion of the edge part of the negative electrode current collector plate may be secured to the beading portion by welding while being supported on the bottom surface of the beading portion formed at the bottom of the battery can.

And, at least a portion of the remaining part except for the coupling part of the beading portion of the negative electrode current collector plate may be coupled to the bent surface of the second uncoated portion by welding, for example, laser welding.

In addition, at least a portion of the edge of the negative electrode current collector plate may be electrically coupled to a surface adjacent to the clamping portion among the upper and lower surfaces of the beading portion.

The cap plate is configured to seal an opening formed at the bottom of the battery can. The cap plate may be made of, for example, a metal material to ensure rigidity.

And, the cap plate may be separated from the electrode assembly and provided to be non-polar. That is, the cap plate may not have a polarity even when it is made of a conductive metal material.

The fact that the cap plate has no polarity means that the cap plate is electrically insulated from the battery can and cell terminals. As such, the cap plate need not be polarized, and its material does not necessarily have to be a conductive metal.

The cap plate may be supported by being seated on a beading portion formed on the battery can. In addition, the cap plate is secured by a clamping portion to be described later. A sealing gasket may be interposed between the cap plate and the clamping portion of the battery can to ensure airtightness of the battery can. That is, the sealing gasket may be provided to be interposed between the edge of the cap plate and the opening of the battery can.

Referring to FIG. 2, the charge/discharge member 100 may be tilted due to various causes during the charge/discharge process and may contact the battery cell 20, but since the insulating member 300 fully surrounds the charge/discharge head portion 120 of the charge/discharge member 100 in the battery cell charge/discharge device 10 according to the first embodiment of the present disclosure, it is possible to prevent the charge/ discharge head portion 120 from contacting the positive electrode terminal 21 and the negative electrode terminal 22 at the same time, thereby preventing a short circuit that may occur during the charge/discharge process of the cylindrical battery cell. Hereinafter, this will be described in detail.

Referring to FIG. 3, the battery cell charge/discharge device 10 according to the first embodiment of the present disclosure includes a charge/discharge member 100, a power supply member 200, and an insulating member 300.

As shown in FIG. 4, the charge/discharge member 100 contacts the battery cell 20 to charge and discharge the battery cell 20. The charge/discharge member 100 may be diverse and may be configured, for example, to include a charge/discharge pin, but is not limited thereto.

Referring to FIG. 3, the charge/discharge member 100 may include a cable portion 110 and a charge/discharge head portion 120. The cable portion 110 is connected to the power supply member 200 to receive power from the power supply member 200. And, the charge/discharge head portion 120 is coupled to the cable portion 110 and is provided to contact the battery cell 20 to charge and discharge the battery cell 20. Here, in order to prevent a short circuit during charge/discharge of the battery cell 20, the side of the charge/discharge head portion 120 is fully surrounded by the insulating member 300. This will be described later.

The power supply member 200 is connected to the charge/discharge member 100 to supply power to the charge/discharge member 100. That is, the charge/discharge member 100 receives power from the power supply member 200 to charge the battery cell 20.

Referring to FIG. 3, the insulating member 300 fully surrounds the side of the charge/discharge head portion 120 of the charge/discharge member 100 and is configured to vary in length during charge/discharge of the battery cell 20. That is, as shown in FIG. 3, the insulating member 300 is formed to be longer than the charge/discharge head portion 120, and accordingly, in normal times, the insulating member 300 may be provided to fully surround the side of the charge/discharge head portion 120.

As a specific example, the charge/discharge head portion 120 is accommodated inside the insulating member 300, and the insulating member 300 may be configured to protrude further downward than the charge/discharge head portion 120 based on the vertical direction of FIG. 3.

And, as shown in FIG. 4, during charge/discharge of the battery cell 20, the insulating member 300 contacts the battery cell 20 earlier than the charge/discharge head portion 120 and varies in length, so that the charge/discharge head portion 120 contacts the battery cell 20, thereby enabling charging and discharging.

Here, the insulating member 300 may be made of an elastic material so that it may be elastically contracted upward when in contact with the battery cell 20. For example, the insulating member 300 may be configured to include at least one of polyamide, polyurethane, and polyester, which have both elasticity and electrical insulating properties, but the material of the insulating member 300 is not limited thereto.

As such, according to the first embodiment of the present disclosure, since the insulating member 300 fully surrounds the side of the charge/discharge head portion 120, the insulating member 300 first contacts the battery cell 20, and the charge/discharge head portion 120 does not contact the positive electrode terminal 21 and the negative electrode terminal 22 at the same time even when the charge/discharge member 100 is tilted due to various causes as shown in FIG. 2 and contacts the battery cell 20, thereby having the effect of preventing a short circuit that may occur during the charge/discharge process of the battery cell 20. In addition, there is an effect of improving productivity by reducing the occurrence of defective battery cells 20 due to a short circuit.

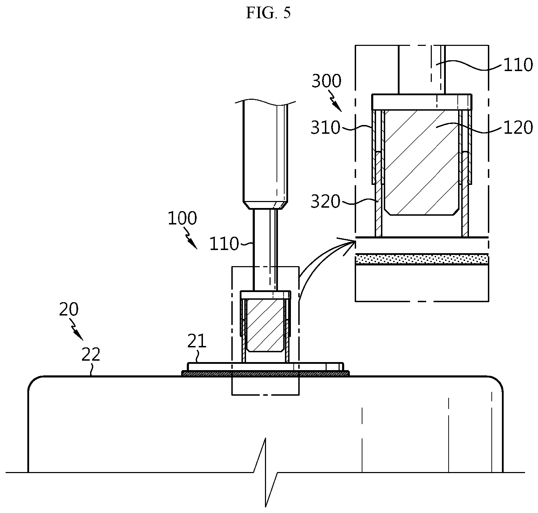

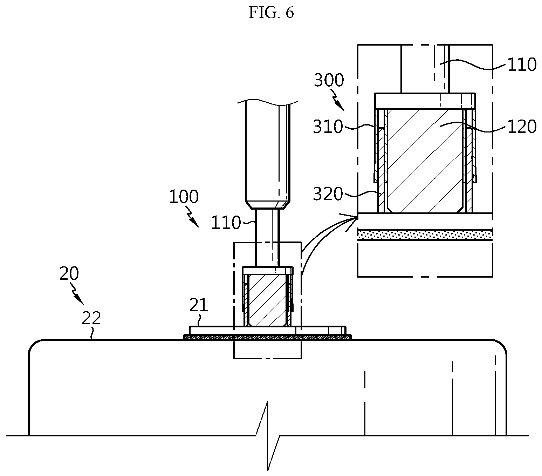

FIGS. 5 and 6 are views showing a process in which a battery cell is charged and discharged by a battery cell charge/discharge device according to a second embodiment of the present disclosure.

The second embodiment of the present disclosure differs in configuration from the first embodiment in that it includes a first cover portion 310 and a second cover portion 320. And, the contents common to the parts described in the first embodiment are replaced by the description of the first embodiment described above. In addition, the contents applicable to the first embodiment among the parts described in the second embodiment may be applied to the first embodiment.

Referring to FIG. 5, the insulating member 300 may include a first cover portion 310 and a second cover portion 320.

The first cover portion 310 is coupled to the cable portion 110 and is configured to surround the charge/discharge head portion 120. And, the second cover portion 320 is inserted into the first cover portion 310, moves along the inside of the first cover portion 310, and is configured to surround the charge/discharge head portion 120. That is, the second cover portion 320 is inserted into the first cover portion 310 and is configured to move up and down.

Referring to FIG. 5, the second cover portion 320 descends downward inside the first cover portion 310 due to gravity, so that the first cover portion 310 and the second cover portion 320 surround the charge/discharge head portion 120 together. That is, in normal times, the first cover portion 310 and the second cover portion 320 protect the charge/discharge head portion 120 and prevent a short circuit.

And, referring to FIG. 6, when charging and discharging, the second cover portion 320 first contacts the battery cell 20 and moves upward inside the first cover portion 310, and the charge/discharge head portion 120 may contact the battery cell 20 to enable charging and discharging.

In the case of the second embodiment of the present disclosure, there is an effect of being applied even to a material having electrical insulation but no elasticity.

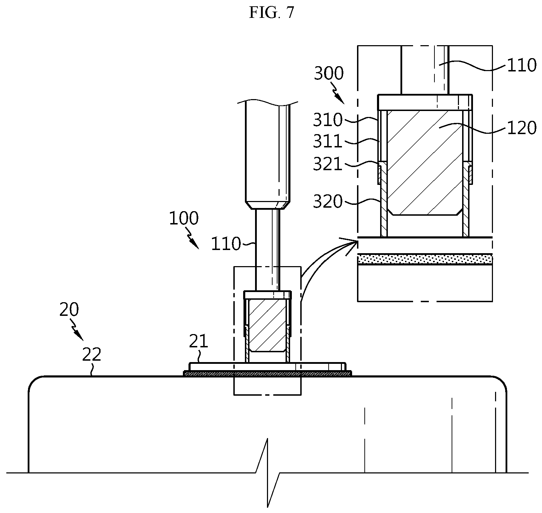

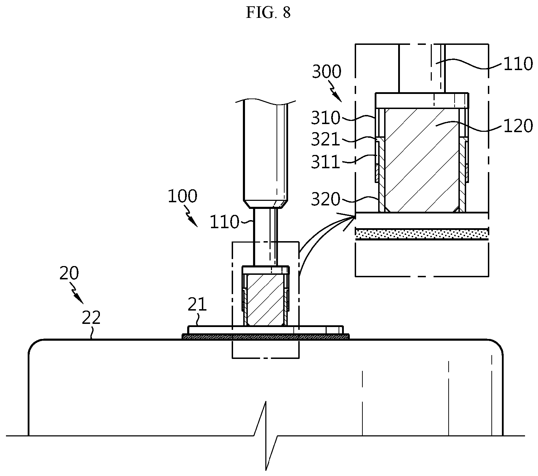

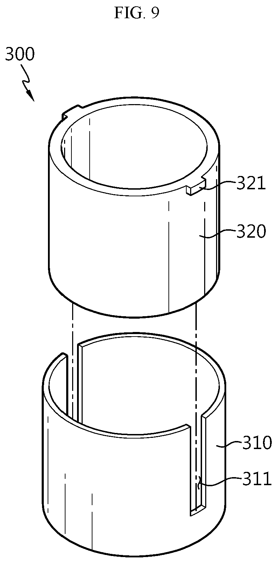

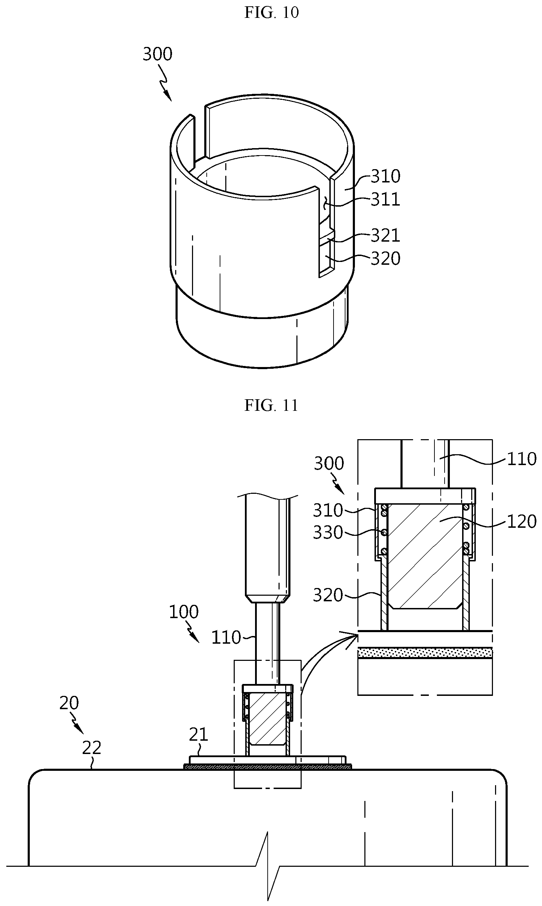

FIGS. 7 and 8 are views showing a process in which a battery cell is charged and discharged by a battery cell charge/discharge device according to a third embodiment of the present disclosure, and FIGS. 9 and 10 are schematic perspective views showing a state in which a guide protrusion of a second cover portion moves along a guide groove of a first cover portion in a battery cell charge/discharge device according to a third embodiment of the present disclosure.

The third embodiment of the present disclosure differs in configuration from the first or second embodiment in that a guide groove 311 is formed in the first cover portion 310 and a guide protrusion 321 is formed in the second cover portion 320. And, the contents common to the parts described in the first or second embodiment are replaced by the description of the first or second embodiment described above. In addition, the contents applicable to the first or second embodiment among the parts described in the third embodiment may be applied to the first or second embodiment.

First, referring to FIGS. 9 and 10, a guide groove 311 is formed in the first cover portion 310, and a guide protrusion 321 is formed in the second cover portion 320. And, the guide protrusion 321 of the second cover portion 320 is configured to move along the guide groove 311 of the first cover portion 310.

Referring to FIG. 7, the contents in which the second cover portion 320 descends downward inside the first cover portion 310 due to gravity, so that the first cover portion 310 and the second cover portion 320 surround the charge/discharge head portion 120 together, and in normal times, the first cover portion 310 and the second cover portion 320 protect the charge/discharge head portion 120 and prevent a short circuit, are common to the second embodiment described above. However, when the second cover portion 320 moves downward inside the first cover portion 310, the guide protrusion 321 of the second cover portion 320 moves downward while being guided along the guide groove 311 of the first cover portion 310.

And, referring to FIG. 8, the contents in which when charging and discharging, the second cover portion 320 first contacts the battery cell 20 and moves upward inside the first cover portion 310, and the charge/discharge head portion 120 may contact the battery cell 20 to enable charging and discharging, are also common to the second embodiment described above. However, when the second cover portion 320 moves upward inside the first cover portion 310, the guide protrusion 321 of the second cover portion 320 moves upward while being guided along the guide groove 311 of the first cover portion 310.

In the case of the third embodiment of the present disclosure, there is an effect of not only being applied even to a material having electrical insulation but no elasticity, but also improving the accuracy of the vertical movement of the second cover portion 320.

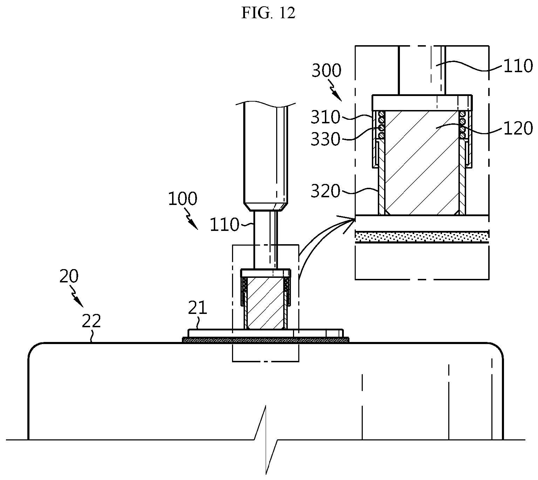

FIGS. 11 and 12 are views showing a process in which a battery cell is charged and discharged by a battery cell charge/discharge device according to a fourth embodiment of the present disclosure.

The fourth embodiment of the present disclosure differs in configuration from the first to third embodiments in that it includes an elastic portion 330 providing an elastic force to the second cover portion 320. And, the contents common to the parts described in the first to third embodiments are replaced by the description of the first to third embodiments described above. In addition, the contents applicable to the first to third embodiments among the parts described in the fourth embodiment may be applied to the first to third embodiments.

Referring to FIG. 11, the elastic portion 330 is located inside the first cover portion 310 and is coupled to the second cover portion 320 to provide an elastic force to the second cover portion 320. The second cover portion 320 descends downward inside the first cover portion 310 due to the elastic force of the elastic portion 330. Accordingly, the first cover portion 310 and the second cover portion 320 surround the charge/discharge head portion 120 together. That is, in normal times, the first cover portion 310 and the second cover portion 320 protect the charge/discharge head portion 120 and prevent a short circuit.

And, referring to FIG. 12, the contents in which when charging and discharging, the second cover portion 320 first contacts the battery cell 20 and moves upward inside the first cover portion 310, and the charge/discharge head portion 120 may contact the battery cell 20 to enable charging and discharging, are the same as in the second embodiment described above. However, when charging and discharging of the battery cell 20 is completed, the second cover portion 320 may move downward again by the elastic force of the elastic portion 330.

In the case of the fourth embodiment of the present disclosure, there is an effect of not only being applied even to a material having electrical insulation but no elasticity, but also ensuring the return of the second cover portion 320 to its original position by the elastic force of the elastic portion 330.

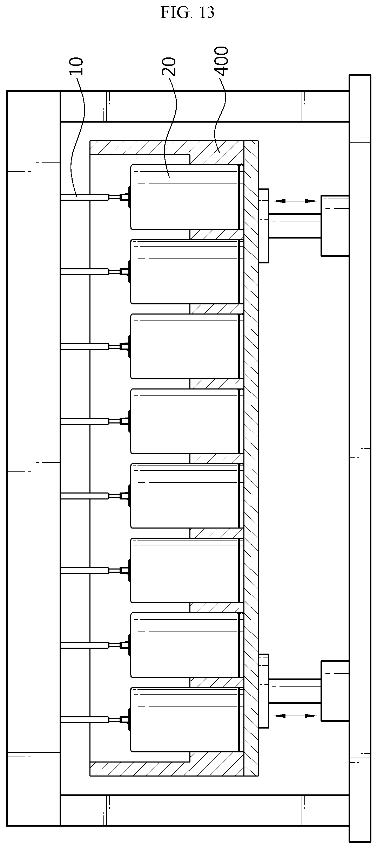

FIG. 13 is a schematic view of a battery cell charge/discharge device according to a fifth embodiment of the present disclosure.

The fifth embodiment of the present disclosure differs in configuration from the first to fourth embodiments in that it may charge and discharge a plurality of battery cells 20 at one time. And, the contents common to the parts described in the first to fourth embodiments are replaced by the description of the first to fourth embodiments described above. In addition, the contents applicable to the first to fourth embodiments among the parts described in the fifth embodiment may be applied to the first to fourth embodiments.

Referring to FIG. 13, at least one battery cell 20 may be seated on a jig member 400. And, the jig member 400 may be configured to be movable up and down (see arrows in FIG. 13) while the battery cell 20 is seated. In the case of the fifth embodiment, even when the charge/discharge member 100 of the battery cell charge/discharge device 10 is secured, there is an effect of charging and discharging the battery cell 20 while the jig member 400 moves up and down.

In addition, a plurality of battery cells 20 may be seated on the jig member 400. And, a plurality of battery cell charge/discharge devices 10 according to each embodiment of the present disclosure are installed on each upper side of the plurality of battery cells 20, and when the jig member 400 moves upward, it has the effect that the plurality of battery cells 20 may be charged and discharged at one time.

Here, the jig member 400 may be diverse and, for example, may include a cell tray where a plurality of battery cells 20 are seated at one time. However, it is not limited thereto.

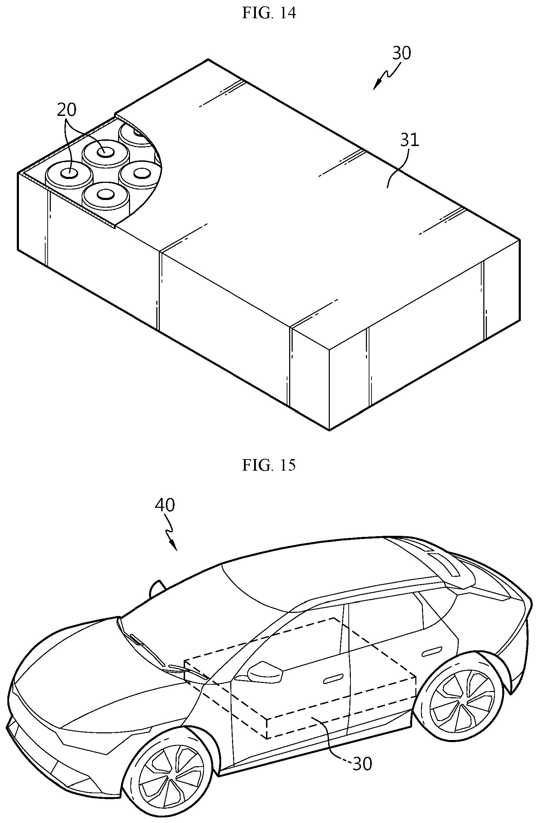

FIG. 14 is a view schematically showing the configuration of a battery pack including a battery cell produced using a battery cell charge/discharge device according to each embodiment of the present disclosure.

Referring to FIG. 14, a battery pack 30 according to an embodiment of the present disclosure may include one or more battery cells 20. Here, the battery cell 20 is a battery cell 20 produced using the battery cell charge/discharge device 10 according to each embodiment of the present disclosure as described above, and may be a cylindrical battery cell.

In addition, the battery pack 30 may further include a pack housing 31 for accommodating the battery cell 20, various devices for controlling charge/discharge of the battery cell 20, such as a BMS, a current sensor, a fuse, and the like.

FIG. 15 is a view for describing a vehicle including the battery pack of FIG. 14.

Referring to FIG. 15, a vehicle 40 according to an embodiment of the present disclosure may include one or more battery cells 20 or battery packs 30. The battery cell 20 is a battery cell 20 produced using the battery cell charge/discharge device 10 according to each embodiment of the present disclosure as described above. And, the battery pack 30 may include one or more battery cells 20 as described above.

Here, the vehicle 40 includes various vehicles designed to use electricity, such as electric vehicles or hybrid vehicles.

The terms indicating directions as used herein such as upper, lower, left, and right are used for convenience of description only, and it is obvious to those skilled in the art that the term may change depending on the position of the stated element or an observer.

While the present disclosure has been described hereinabove with reference to a limited number of embodiments and drawings, the present disclosure is not limited thereto and it is obvious to those skilled in the art that a variety of modifications and changes may be made thereto within the technical aspects of the present disclosure and the equivalent scope of the appended claims. Therefore, the embodiments disclosed above should be considered from an illustrative perspective rather than a limiting perspective. That is, the scope of the true technical idea of the present disclosure is shown in the claims, and all differences within the scope of equivalents should be construed as being included in the present disclosure.

### INDUSTRIAL APPLICABILITY

The present disclosure relates to a battery cell charge/discharge device, a battery cell produced using the same, and a battery pack and a vehicle including the battery cell, and is particularly applicable to industries related to secondary batteries.

## Claims

1. A battery cell charge/discharge device, which is a device for charging and discharging a battery cell during an activation process of the battery cell, comprising:
a charge/discharge member contacting the battery cell to charge and discharge the battery cell;
a power supply member connected to the charge/discharge member and supplying power to the charge/discharge member; and
an insulating member surrounding the charge/discharge member and varying in length during charge/discharge of the battery cell.

2. The battery cell charge/discharge device according to claim 1,
wherein the charge/discharge member comprises:
a cable portion connected to the power supply member; and
a charge/discharge head portion coupled to the cable portion and charging and discharging the battery cell, and
the insulating member fully surrounds the side of the charge/discharge head portion, and during charge/discharge of the battery cell, the insulating member contacts the battery cell earlier than the charge/discharge head portion and varies in length, so that the charge/discharge head portion contacts the battery cell.

3. The battery cell charge/discharge device according to claim 2,
wherein the insulating member is formed to be longer than the charge/discharge head portion.

4. The battery cell charge/discharge device according to claim 3,
wherein the charge/discharge head portion is accommodated inside the insulating member, and
the insulating member protrudes further downward than the charge/discharge head portion based on the vertical direction.

5. The battery cell charge/discharge device according to claim 1,
wherein the insulating member is made of an elastic material.

6. The battery cell charge/discharge device according to claim 5,
wherein the insulating member is elastically contracted upward when in contact with the battery cell.

7. The battery cell charge/discharge device according to claim 5,
wherein the insulating member is configured to comprise at least one of polyamide, polyurethane, and polyester.

8. The battery cell charge/discharge device according to claim 2,
wherein the insulating member comprises:
a first cover portion coupled to the cable portion and surrounding the charge/ discharge head portion; and
a second cover portion inserted into the first cover portion, moving along the inside of the first cover portion, and surrounding the charge/discharge head portion.

9. The battery cell charge/discharge device according to claim 8,
wherein a guide groove is formed in the first cover portion,
a guide protrusion is formed on the second cover portion, and
the guide protrusion of the second cover portion moves along the guide groove of the first cover portion.

10. The battery cell charge/discharge device according to claim 8, comprising:
an elastic portion located inside the first cover portion and coupled to the second cover portion to provide an elastic force to the second cover portion.

11. The battery cell charge/discharge device according to claim 1, further comprising:
a jig member on which the battery cell is seated, and which may move up and down while the battery cell is seated.

12. The battery cell charge/discharge device according to claim 11,
wherein the jig member comprises a cell tray on which the battery cell is seated.

13. A battery cell produced using a battery cell charge/discharge device according to any one of claims 1 to 12.

14. A battery pack comprising at least one battery cell according to claim 13.

15. A vehicle comprising at least one battery cell according to claim 13.
